Europäisches Patentamt

European Patent Office

Office européen des brevets

(19)

(11) Veröffentlichungsnummer : **0 072 050 B1**

(12) **EUROPÄISCHE PATENTSCHRIFT**

(45) Veröffentlichungstag der Patentschrift :
09.10.85

(21) Anmeldenummer : 82200850.4

(22) Anmeldetag : 07.07.82

(51) Int. Cl.⁴ : **F 42 B 13/34, F 42 B 33/00, F 16 L 13/14**

(54) Verfahren zur Befestigung der Leuchtsatzhülse in einer Bohrung im Heckteil eines Geschosskörpers.

(30) Priorität : 05.08.81 CH 5042/81

(43) Veröffentlichungstag der Anmeldung :
16.02.83 Patentblatt 83/07

(45) Bekanntmachung des Hinweises auf die Patenterteilung : 09.10.85 Patentblatt 85/41

(84) Benannte Vertragsstaaten :
BE CH DE FR GB IT LI NL SE

(56) Entgegenhaltungen :
DE-C-  707 002
FR-A-  799 407
FR-A- 1 485 671
FR-A- 2 255 573
FR-A- 2 364 427
FR-A- 2 398 283
US-A- 2 423 862
US-A- 2 956 471
US-A- 4 132 437

(73) Patentinhaber : Werkzeugmaschinenfabrik Oerlikon-Bührle AG
Birchstrasse 155
CH-8050 Zürich (CH)

(72) Erfinder : Rossmann, Rudolf
Käshaldenstrasse 23
CH-8052 Zürich (CH)

Jouve, 18, rue St-Denis, 75001 Paris, France

## Beschreibung

Die Erfindung betrifft ein Verfahren zur Befestigung einer Leuchtsatzhülze in einer Sackbohrung im Heckteil eines Geschosskörpers, wobei in der Bohrungswand eine ringförmige Nut erzeugt wird, in welche ein Rand der Leuchtsatzhülze hineingepresst wird.

Bei einem bekannten Geschoss dieser Art (CH-PS 622 883) weist die Leuchtsatzhülze an ihrem dem Geschosskörper zugekehrten Ende einen Flansch auf, der in die ringförmige Nut hineinragt.

Bei einem bekannten Verfahren dieser Art (DE-PS-707 002) wird die den Leuchtsatz enthaltende Hülse in einer druckfesten Buchse des Leuchtspurgeschosses dadurch befestigt, dass die Hülse durch den auf den pyrotechnischen Satz wirkenden Pressdruck in eine oder mehrere Ausnehmungen oder dgl. der Buchse eingepresst wird.

Dieses Verfahren hat den Nachteil, dass ein geeigneter, pyrotechnischer Satz verwendet werden muss, der sich dabei nicht entzündet.

Bei einem anderen bekannten Verfahren dieser Art (CH-PS 622 883) wird in die Bohrung des Geschosskörpers am vorderen Ende eine ringförmige Nut eingeschnitten. Die Leuchtsatzhülse wird an ihrem vorderen Ende mit einem nach innen gerichteten Flanschrand versehen. Zur Befestigung der Leuchtsatzhülse wird der Flanschrand durch plastische Deformation in die ringförmige Nut der Bohrung des Geschosskörpers gepresst, wodurch die Bohrung gegen das Eindringen von Treibladungsgasen geschützt ist und die Leuchtsatzhülse im Geschosskörper verankert wird.

Dieses bekannte Verfahren hat den Nachteil, dass sowohl bei der Herstellung der Bohrung im Heckteil des Geschosskörpers, als auch bei der Herstellung der Leuchtsatzhülse, insbesondere des nach innen gerichteten Flansches, genaue Herstellungstoleranzen eingehalten werden müssen.

Dem erfindungsgemässen Verfahren liegt die Aufgabe zugrunde, die Anforderungen an die Herstellungstoleranzen zu vermindern und trotzdem eine zuverlässige und gasdichte Verankerung der Leuchtsatzhülse in der Bohrung im Heckteil zu gewährleisten.

Das erfindungsgemässe Verfahren, mit dem diese Aufgabe gelöst wird, ist dadurch gekennzeichnet, dass a) in einem ersten Verfahrensschritt die Leuchtsatzhülse mit Hilfe eines Einpresszapfens in die Sackbohrung hineingepresst wird und

b) in einem zweiten Verfahrensschritt ein vorzugsweise elastisch deformierbare Kunststoffzapfen durch einen Verstemmeinsatz derart auf den Boden der Bohrung gepreßt wird, daß dieser sich radial nach außen aufweitet und dabei den Rand der Hülse in die Nut preßt.

Durchführungsbeispiele des erfindungsgemässen Verfahrens zur Befestigung einer Leuchtsatzhülse in einer Bohrung im Heckteil eines Geschosskörpers sind im folgenden anhand der beigefügten Zeichnung ausführlich beschrieben. Es zeigt jeweils im Längsschnitt

Figur 1 die Leuchtsatzhülse vor ihrer Befestigung im Geschosskörper,

Figur 2 die mit Hilfe eines Einpresszapfens teilweise im Geschosskörper befestigte Leuchtsatzhülse

Figur 3 die mit Hilfe eines Kunststoffzapfens vollständig im Geschosskörper befestigte Leuchtsatzhülse

Figur 4 einen Verstemmeinsatz mit dem genannten Kunststoffzapfen in nicht deformiertem Zustand.

Figur 5 ein zweites Ausführungsbeispiel der Leuchtsatzhülse gemäss Fig. 1

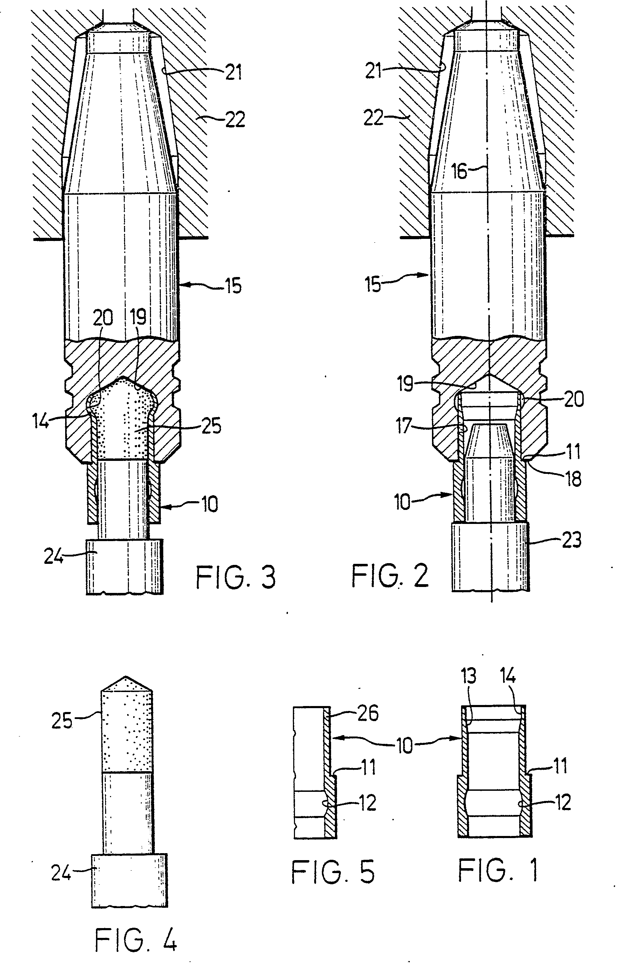

Gemäss Fig. 1 weist eine Leuchtsatzhülse 10 an ihrer Aussenseite eine ringförmige Schulter 11 auf. Ferner besitzt sie im Innern unterhalb der ringförmigen Schulter 11 eine ringförmige Nut 12 und an ihrem oberen Ende eine konische Erweiterung 13 sowie einen verhältnismässig dünnen Rand 14. Vorzugsweise wird für die Leuchtsatzhülse 10 ein Material verwendet, das sich leicht deformieren lässt, ohne dass beim Aufweiten Risse entstehen. Gemäss Fig. 2 weist ein Geschosskörper 15 an seinem hinteren Ende eine zur Geschosskörperachse 16 koaxiale Bohrung 17 auf, in welche die Leuchtsatzhülse 10 bis zur Schulter 11 hinein ragt, d. h. die Schulter 11 der Leuchtsatzhülse 10 stützt sich auf einer Stirnfläche 18 am hinteren Ende des Geschosskörpers 15 ab. Der Boden 19 der Bohrung 17 ist kegelförmig ausgebildet. Unterhalb des kegelförmigen Bodens 19 ist eine ringförmige Nut 20 vorgesehen, welche zur Befestigung der Leuchtsatzhülse dient, wie weiter unten beschrieben ist. Im übrigen unterscheidet sich der in der Zeichnung dargestellte Geschosskörper 15 nicht von einem bekannten Geschosskörper. Der Aufbau des Geschosskörpers 15 ist — da nicht zur Erfindung gehörend — hier nicht näher beschrieben.

Zur Befestigung der Leuchtsatzhülse 10 im Geschosskörper 15 wird — in einem ersten Verfahrensschritt — der Geschosskörper 15 in eine Bohrung 21 eines Trägers oder Stützkörpers 22 eingesetzt. Ferner wird die Leuchtsatzhülse 10 auf einen Einpresszapfen 23 aufgesetzt. Mit Hilfe dieses Einpresszapfens 23 kann die Leuchtsatzhülse 10 in die Sackbohrung 17 des Geschosskörpers 15 hineingepresst werden.

Durch diesen ersten Verfahrensschritt ist die Leuchtsatzhülse 10 dank dem vorgesehenen Presssitz bereits im Geschosskörper verankert.

Eine zusätzliche Verankerung der Leuchtsatzhülse 10 in der Bohrung 17 des Geschosskörpers 15 wird durch einen im folgenden beschriebenen zweiten Verfahrensschritt erreicht :

Der Einpresszapfen 23 wird aus der Leuchtsatzhülse 10 wieder herausgezogen und stattdessen wird ein in Fig. 4 dargestellter Verstemmeinsatz

24 mit einem vorzugsweise elastisch deformierbaren Kunststoffzapfen 25 in die Leuchtsatzhülse 10 hineingeschoben, wie aus Fig. 3 ersichtlich ist. Der Kunststoffzapfen 25 wird gegen den kegelförmigen Boden 19 gedrückt, wodurch er radial nach aussen sich aufweitet und dabei den dünnen oberen Rand 14 der Leuchtsatzhülse 10 in die ringförmige Nut 20 der Sackbohrung 17 hinein presst. Dieser dünne obere Rand 14 wird dabei plastisch deformiert und behält seine in Fig. 3 dargestellte Form auch nach Entfernen des Kunststoffzapfens 25 bei.

Der Vorteil dieses Verfahrens besteht darin, dass zuverlässig eine formschlüssige und gasdichte Verbindung zwischen Geschosskörper 15 und Leuchtsatzhülse 10 erreicht wird.

Sowohl die Bohrung 17 im Geschosskörper 15, als auch die Leuchtsatzhülse 10 können mit grossen Toleranzen hergestellt werden, da Toleranzfehler durch die plastische Deformation des Randes 14 ausgeglichen werden.

Das beschriebene Verfahren eignet sich besonders für panzerbrechende Geschosskörper oder Geschosskerne, die aus hartem schwer verformbarem Material hergestellt werden.

Gemäss Fig. 5 kann die Leuchtsatzhülse 10 statt des dünnen Randes 14 einen dickeren Rand 26 aufweisen, wobei sowohl die Aussenwand als auch die Innenwand der Leuchtsatzhülse 10 zylindrisch sind.

## Patentanspruch

Verfahren zur Befestigung einer Leuchtsatzhülse (10) in einer Sackbohrung (17) im Heckteil eines Geschosskörpers (15), wobei in der Bohrungswand eine ringförmige Nut (20) erzeugt wird, in welche ein Rand (14) der Leuchtsatzhülse (10) hineingepresst wird, dadurch gekennzeichnet, dass

a) in einem ersten Verfahrensschritt die Leuchtsatzhülse (10) mit Hilfe eines Einpresszapfens (23) in die Bohrung (17) hineingepresst wird, und

b) in einem zweiten Verfahrensschritt ein vorzugsweise elastisch deformierbare Kunststoffzapfen (25) durch einen Verstemmeinsatz (24) derart auf den Boden (19) der Bohrung (17) gepreßt wird, daß dieser sich radial nach außen aufweitet und dabei den Rand (14) der Hülse (10) in die Nut (20) preßt.

## Claim

Method for securing a flare composition sleeve (10) in a blindhole bore (17) provided at the tail of a projectilebody (15), wherein a ring-shaped groove (20) is formed in a borewall into which there is pressed an end-portion (14) of the flare composition sleeve (10), comprising the steps of :

a) during a first method step pressing the flare composition sleeve (10) into the bore (17) with the aid of a pressing-in plug (23) member, and

b) during a second method step a preferably elastically deformable plug member (25) is pressed by a plugging insert (24) in such manner against the floor (19) of the bore (17), that the plug member (25) is radially widened until the ring-shaped edge (14) of the sleeve (10) bears against the ring-shaped groove (20).

## Revendication

Procédé pour fixer une douille d'une garniture éclairante (10) dans un perçage (17) de la partie arrière d'un corps d'obus (15), la paroi du perçage formant une rainure annulaire (20) dans laquelle est pressé un bord (14) de la douille (10) de la garniture éclairante, caractérisé en ce que :

a) au cours d'une première étape du procédé, on presse la douille (10) de la garniture éclairante dans le perçage (17) à l'aide d'un mandrin de presse (23),

b) au cours d'une seconde étape du procédé, on élargit le bord annulaire (14) de la douille (10) de la garniture éclairante à l'aide d'un bouchon (25) en matière synthétique et d'un élément de poussée (24) jusqu'à ce que le bord annulaire (14) s'applique dans la rainure annulaire (20).

0 072 050

FIG. 3

FIG. 2

FIG. 4

FIG. 5

FIG. 1

1